(19) Europäisches Patentamt
European Patent Office
Office européen des brevets

(11) **EP 2 785 129 A2**

(12) **EUROPEAN PATENT APPLICATION**

(43) Date of publication:
**01.10.2014 Bulletin 2014/40**

(51) Int Cl.:
*H04W 72/04* (2009.01)

(21) Application number: **14167037.2**

(22) Date of filing: **09.03.2006**

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.03.2005 US 660599 P**
**08.03.2006 US 370335**

(62) Document number(s) of the earlier application(s) in accordance with Art. 76 EPC:
**06737671.5 / 1 869 562**

(71) Applicant: **InterDigital Technology Corporation Wilmington, DE 19809 (US)**

(72) Inventors:
• **Livet, Catherine**
  **Montreal, Québec H2J 3L6 (CA)**
• **Tomici, John L.**
  **Southold, NY 11971 (US)**
• **Zaki, Maged**
  **San Diego, CA 92126 (US)**

(74) Representative: **Hjalmarsson, Magnus Axel**
**Awapatent AB**
**P.O. Box 99**
**351 04 Växjö (SE)**

Remarks:
This application was filed on 05-05-2014 as a divisional application to the application mentioned under INID code 62.

(54) **Accepting or rejecting access requests**

(57)     A method and WTRU comprising: receiving, by a first wireless transmit/receive unit (WTRU) via a second WTRU a request; determining, by the first WTRU, whether accepting the request would cause an operational parameter to exceed a threshold; on condition that the first WTRU determines to reject the request, transmitting, by the first WTRU to the second WTRU, a response indicating that the request is rejected and a reason for rejection, the response including an offer that is acceptable to the first WTRU to at least modify resources associated with the request; and on condition that the first WTRU determines that accepting the request would not cause the operational parameter to exceed the threshold, transmitting by the first WTRU to the second WTRU a response indicating that the request is accepted. In another embodimetn, a method and WTRU comprising: receiving, by a wireless transmit/receive unit (WTRU) a request; determining, by the WTRU, whether accepting the request would cause an operational parameter to exceed a threshold; selecting, based on the determination, among responding to the request by: indicating that the request is accepted, on condition that accepting the request would not cause the operational parameter to exceed the threshold; indicating that the request is rejected, and providing a reason for rejection; and indicating that the request is rejected, and providing an offer that would to be accepted by the WTRU to modify resources associated with the request.

FIG. 4

**Description**

FIELD OF INVENTION

The present invention is generally related to wireless communication systems. More particularly, the present invention is related to path-based traffic stream (TS) admission control mechanisms in mesh-type wireless communication networks having centralized or distributed admission control architecture.

BACKGROUND

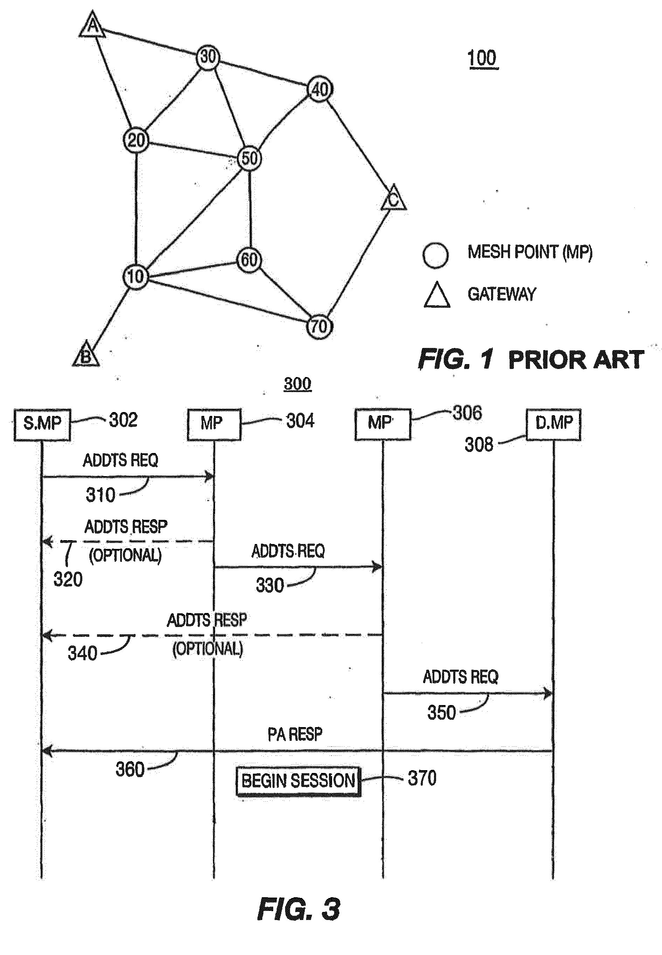

A wireless local area network (WLAN) mesh network is an IEEE 802.11-based wireless distribution system (WDS) including two or more mesh points (MPs) interconnected via IEEE 802.11 links and communicating via WLAN mesh services. Figure 1 shows a typical WLAN mesh network 100 including a plurality of mesh points (MPs) 10, 20, 30, 40, 50, 60 and 70 and gateways A, B and C. Each of the MPs 10, 20, 30,40, 50, 60 and 70 of the WLAN mesh network 100 receives and transmits its own traffic, while also acting as a router for other MPs. The gateways A, B, and C provide gateway services to the MPs 10, 20, 30, 40, 50, 60 and 70, including, for example, connections to the Internet, the public switched telephone network (PSTN), and other wired and wireless networks. For example, the MP 50 has no direct data connection with any of the gateways A, B, or C. The MP 50 accesses gateway A via the MP 20 and/or the MP 30.

Referring still to Figure 1, the WLAN mesh network 100 employs TS admission control to ensure that new incoming TSs can be admitted in the WLAN mesh network 100 without sacrificing current levels of transmission quality. In legacy networks, a new quality of service (QoS) TS requiring admission control will be admitted as long as the access point (AP) can support the resources/QoS requirements of the TS. However, in mesh networks, admission control must ensure that all of the MPs in the network will be able to satisfy the resources/QoS requirements for current and new sessions upon admission of the new TS.

Therefore, a method and apparatus for performing path-based TS admission control in wireless mesh networks is desired.

SUMMARY

The present invention is related to a method and apparatus for implementing path-based TS admission control in a wireless mesh network having a distributed and/or centralized admission control architecture. When the wireless mesh network utilizes distributed admission control architecture, a source MP (S.MP) transmits a request for TS admission requiring certain resources/QoS. The request propagates through the wireless mesh network until a destination MP (D.MP) is reached and an admitted path is determined. If an intermediate MP is unable to meet the requested resources/QoS for the TS, the S.MP is notified. When the wireless mesh network utilizes centralized admission control architecture, an S.MP requests a route to the D.MP from a central controller. The central controller maintains a status of MPs in the wireless mesh network, and selects a best route to handle the TS to satisfy the requested resources/QoS.

BRIEF DESCRIPTION OF THE DRAWINGS

A more detailed understanding of the invention may be had from the following description of a preferred embodiment, given by way of example and to be understood in conjunction with the accompanying drawing wherein:

    Figure 1 shows a typical WLAN mesh network;
    Figure 2 is a flow diagram of a process of performing path-based TS admission control in a WLAN mesh network having a distributed admission control architecture in accordance with a preferred embodiment of the present invention;

Figure 3 is a signal flow diagram illustrating an example of an S.MP performing path-based TS admission control in a WLAN mesh network having a distributed admission control architecture in which intermediate MPs are able to satisfy the requested/QoS requirements of a new TS generated by an S.MP in accordance with the process of Figure 2;

Figure 4 is a signal flow diagram illustrating an example of an S.MP performing path-based TS admission control in a WLAN mesh network having a distributed admission control architecture in which an intermediate MP is unable to satisfy the requested resources/QoS requirements of a new TS generated by an S.MP in accordance with another embodiment of the present invention;

Figure 5 is a flow diagram of a process of performing path-based TS admission control in a WLAN mesh network having central controller in accordance with another embodiment of the present invention;

Figure 6 is a signal flow diagram of path-based TS admission control in a WLAN mesh network having centralized admission control architecture in accordance with the process of Figure 5;

Figure 7 is an exemplary block diagram of an MP configured to perform admission control in both a distributed admission controlled wireless mesh network and/or a centralized admission controlled wireless mesh network in accordance with the present invention; and

Figure 8 is an exemplary block diagram of a central controller for performing path-based TS admission control in a WLAN mesh network having a centralized admission control architecture in accordance with the present invention.

DETAILED DESCRIPTION OF THE PREFERRED EMBODIMENTS

Although the features and elements of the present invention are described in the preferred embodiments in particular combinations, each feature or element can be used alone (without the other features and elements of the preferred embodiments) or in various combinations with or without other features and elements of the present invention.

When referred to hereafter, the terminology "MP" includes but is not limited to a WTRU, a user equipment (UE), a mobile station, a fixed or mobile subscriber unit, a pager, a user station (STA) or any other type of device capable of operating in a wireless environment. When referred to hereafter, the terminology "AP" includes but is not limited to a Node-B, a base station, a site controller or any other type of interfacing device in a wireless environment.

The present invention is a method and apparatus for path-based TS admission control. In a preferred embodiment of the present invention, a WLAN mesh network has distributed admission control architecture. Accordingly, each MP of the WLAN mesh network shares the responsibility for controlling TS admission, as opposed to this function of the WLAN mesh network being performed at a central location, such as a gateway or an AP.

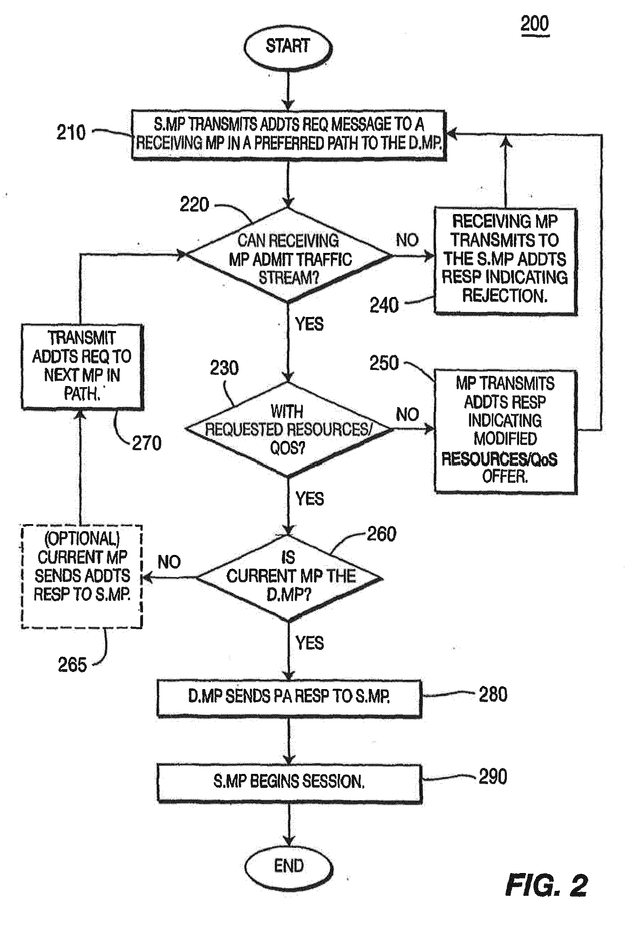

Figure 2 is a flow diagram of a process 200 of performing path-based TS admission control in a WLAN mesh network having a distributed admission control architecture in accordance with a preferred embodiment of the present invention. In this embodiment, an S.MP originates a TS with initial resources/QoS requirements destined to a D.MP. The S.MP transmits an add TS request (ADDTS Req) message to a receiving MP in an admitted path to the D.MP (step 210). The receiving MP then determines whether the TS can be admitted or whether to reject the TS (step 220). If the TS can be admitted, the receiving MP then determines whether to admit the TS with less resources/QoS than requested, (i.e. a modified, or lower, QoS), (step 230).

An MP may use the following admission criteria parameters to determine whether requested resources/QoS can be satisfied. It should be understood that the following list of parameters is not exhaustive, it is merely exemplary, and multiple parameters may be used in any combination as desired.

1) Channel occupancy: Individual MPs measure their channel utilization, defined as the percentage of time the physical layer senses that the medium busy, as indicated by either the physical or virtual carrier sense mechanism.

2) Buffer occupancy: An MP measures the buffer occupancy of its queue of the required access class.

3) Link conditions: An MP measures the number of frame retransmissions, missing acknowledgement (ACK), or the like.

In a preferred embodiment, the present invention utilizes channel occupancy (CO) for determining whether a given MP is capable of satisfying a requested resources/QoS. Each MP measures CO constantly, or at dynamic or predetermined intervals. A TS will be admitted by a given MP if the MP CO, after admitting the TS, remains below a threshold CO, $CO_{threshold}$. This can be shown as follows:

$$CO_{Current} + \Delta CO < CO_{threshold} \qquad \text{Equation (1)}$$

where $CO_{current}$ is the CO before admission of the TS, $\Delta CO$ is the change in CO due to the admitted TS, and $CO_{threshold}$ is a predetermined or dynamic threshold which the given MP cannot exceed and still guarantee the requested resources/QoS.

Alternatively, a CO admission parameter may be applied per TS at a given MP. In this manner, an MP may select a more stringent $CO_{threshold}$ for a given TS carrying real time services, such as voice over internet protocol (VoIP). For deterministic admission control this may require a quota for each TS as follows:

$$CO_{Current}^{TS1} + \Delta CO^{TS1} < CO_{threshold}^{TS1} \cdot \qquad \text{Equation (2)}$$

In both Equations 1 and 2, the calculation of $\Delta CO$ must consider both the incoming and outgoing effects of admission of a TS. For an intermediate MP, the admission control considers both the capacity of the MP to process the incoming TS, (i.e., incoming admission control), as well as the capacity of the MP to transmit the outgoing TS, (i.e.,

outgoing admission control). For an S.MP, only the outgoing admission control need be considered. For the D.MP, only the incoming admission control need be considered.

Referring still to Figure 2, if the receiving MP determines not to admit, (i.e., rejects), the TS at step 220, the receiving MP transmits an ADDTS Resp message back to the S.MP indicating the reason for the rejection (step 240).

The process 200 then returns to step 210, allowing the S.MP to start the process 200 over with perhaps modified resources/QoS or an alternative admitted path.

If the receiving MP admits the TS at step 220, but does not admit the TS with the requested resources/QoS requirements at step 230, the receiving MP transmits an ADDTS Resp message to the S. MP indicating a modified resources/QoS offer (step 250), before returning back to step 210 for further action by the S.MP. If the requested resources/QoS is met by the receiving MP in step 230, it must then be determined whether the current MP is in fact the D.MP (step 260). If not, the receiving MP transmits an ADDTS Req message to the next MP in the admitted path (step 270), and the process 200 returns to step 220 for the determination of TS admission by the next MP. Optionally, the current MP sends an ADDTS Resp message to the S.MP indicating success (step 265).

If the receiving MP is in fact the D.MP, then the D.MP sends a path admission (PA) response (PA Resp) message to the S.MP via any route (step 280). The S.MP is now ready to begin a session with the D.MP using the admitted path (step 290).

A PA Resp timeout mechanism is preferably employed at the S.MP, although it is not required. When a timeout mechanism is employed, a timer is initialized and is started when the S.MP transmits the ADDTS Req message. If the PA Resp is not received before a predetermined timeout threshold, the S.MP may abandon the ADDTS Req and optionally transmit another ADDTS Req message along the same or another admitted path. Alternatively, the delay can be measured via time stamping the PA Resp and the TS can be terminated if the delay requirement is not satisfied when the PA Resp is received at the S.MP.

Figure 3 is a signal flow diagram illustrating an example of an S.MP performing path-based TS admission control in a WLAN mesh network 300 having a distributed admission control architecture in which intermediate MPs are able to satisfy the requested resources/QoS requirements of a new TS generated by an S.MP in accordance with the process 200 of Figure 2. The WLAN mesh network 300 includes an S.MP 302, a plurality of intermediate MPs 304, 306, and a D.MP 308. Each intermediate MP 304, 306, is capable of satisfying the resources/QoS requested by the S.MP 302. The S.MP 302 transmits an ADDTS Req message to the MP 304, specifying a requested resources/QoS (step 310). The MP 304 determines that it can meet the requested resources/QoS, and transmits an ADDTS Req message to the MP 306 (step 330). Optionally, the MP 304 also transmits an ADDTS Resp message back to the S.MP 302 indicating successful admission of the TS by the MP 304 (step 320). The MP 306 determines that it can meet the requested resources/QoS of the TS, and transmits an ADDTS Req message to the D.MP 308 (step 350). Optionally, the MP 306 also transmits an ADDTS Resp message back to the S.MP 302 indicating successful admission of the TS by the MP 306 (step 340). The D.MP 308 determines that it can meet the requested resources/QoS requirements, and transmits a PA Resp message to the S.MP 302 indicating the admitted path (step 360), and a session between the S.MP 302 and the D.MP 308 is now ready to begin (step 370).

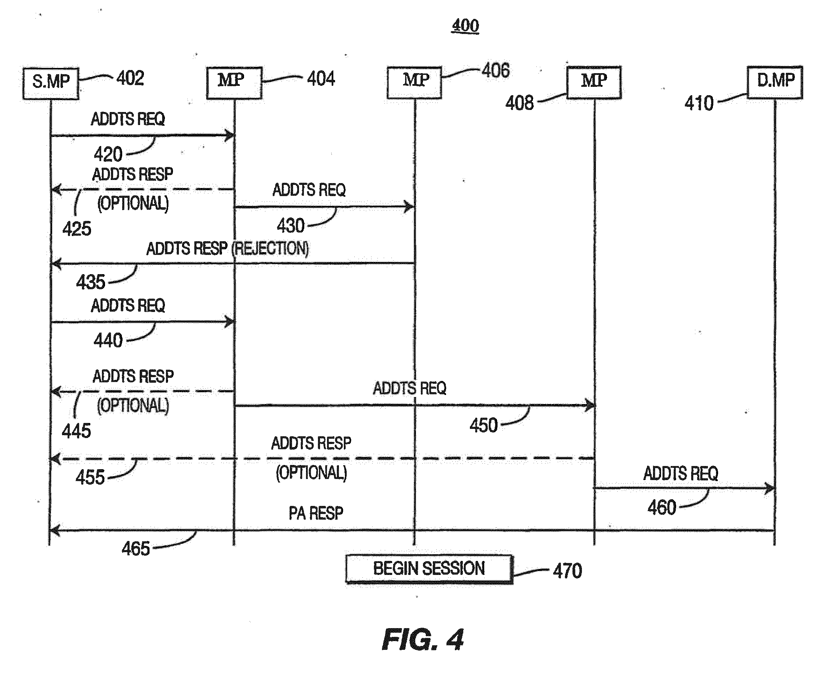

Figure 4 is a signal flow diagram illustrating an example of an S.MP performing path-based TS admission control in a WLAN mesh network 400 having a distributed admission control architecture where an intermediate MP is unable to satisfy the requested resources/QoS requirements of a new TS generated by an S.MP in accordance with the process 200 of Figure 2. The WLAN mesh network 400 includes an S.MP 402, a plurality of intermediate MPs 404,406,408 and a D.MP 410. The S.MP 402 transmits an ADDTS Req message to the MP 404, specifying requested resources/QoS (step 420). The MP 404 determines that it can meet the requested resources/QoS, and transmits an ADDTS Req message to MP 406 (step 430). Optionally, the MP 404 also transmits an ADDTS Resp message back to the S.MP 402 indicating successful admission of the TS by the MP 404 (step 425). The MP 406 receives the ADDTS Req from MP 404, but determines that it cannot meet the requested resources/QoS of the TS, and transmits an ADDTS Resp message to the S.MP 402 containing the reasons for the rejection (step 435), (e.g., the transmission queue is already full, requested resources exceed an established limit, unable to meet requested resources/QoS requirement, or the like). Alternatively, the ADDTS Resp message transmitted by the MP 406 to the S.MP 402 in step 435 may contain an offer for a modified resources/QoS that the MP 406 is able to admit.

Still referring to Figure 4, upon receiving the ADDTS Resp message from the MP 406 in step 435, the S.MP 402 determines a new admitted path excluding the MP 406, either because the MP 406 can not handle the TS at all, or because the S.MP 402 is unwilling to lower its resources/QoS requirements to meet the resources/QoS offered by the MP 406. The S.MP 402 then transmits another ADDTS Req message to the MP 404, specifying a requested resources/QoS as well as providing information associated with a new route which bypasses the MP 406 (step 440). The MP 404 determines that it can meet the requested resources/QoS, and transmits an ADDTS Req message to the MP 408 (step 450). Optionally, the MP 404 also transmits an ADDTS Resp message back to the S.MP 402 indicating successful admission of the TS by the MP 404 (step 445). The MP 408 determines that it can meet the requested resources/QoS of the TS, and transmits an ADDTS Req message to the D.MP 410 (step 460). Optionally, the MP 408 also transmits an ADDTS Resp message back to the S.MP 402 indicating successful admission of the TS by MP 408 (step 455). The D.MP 410 determines that it can meet the requested resources/QoS requirement, and transmits a PA Resp message to the S.MP 402 indicating that the admitted path (step 465), and a session between the S.MP 402 and the D.MP 410 is now ready to begin (step 470).

In an alternative embodiment of the invention, centralized TS admission control architecture is implemented in a WLAN mesh network. In this type of WLAN mesh network, a central controller performs the TS admission control functions for the entire WLAN mesh network.

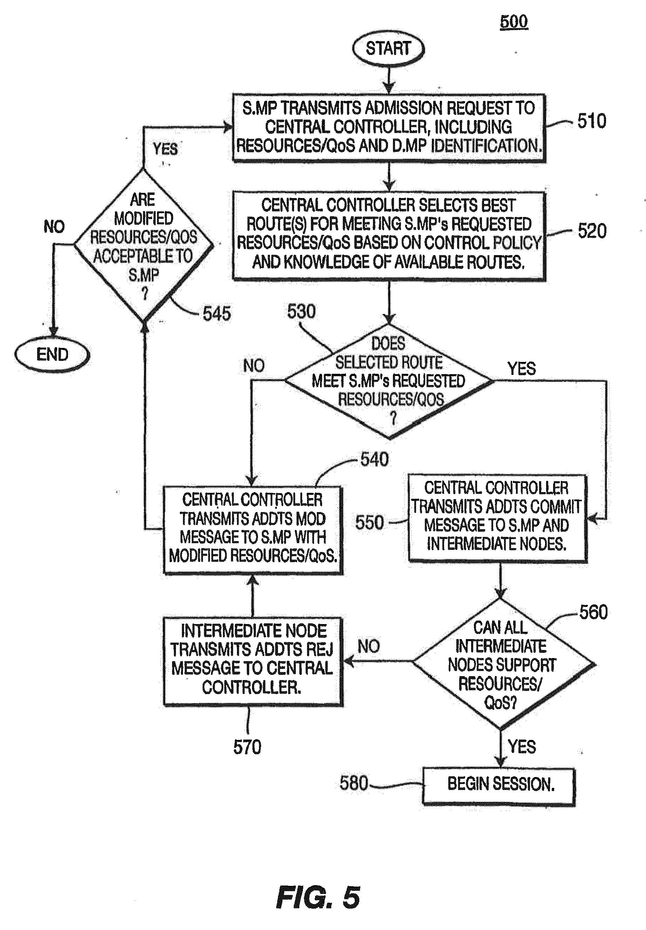

Figure 5 is a flow diagram of a process of performing path-based TS admission control in a WLAN mesh network having a central controller in accordance with another embodiment of the present invention. When an S.MP desires to create a TS to a D.MP, the S.MP transmits an ADDTS Req message to the central controller, including resources/QoS and D.MP identification (step 510). The ADDTS Req message includes desired resources/QoS and an identification of the D.MP. The central controller selects the best route for satisfying the S.MP's desired resources/QoS requirements based on control policy and knowledge of available routes in the mesh network (step 520). In step 530, a determination is made as to whether the best route selected by the central controller does in fact satisfy the desired resources/QoS requested by the S.MP. If the best route selected by the central controller does not satisfy the desired resources/QoS requested by the S.MP, the central controller transmits an add TS modify (ADDTS Mod) message to the S.MP (step 540). The ADDTS Mod message contains currently available resources/QoS, of the mesh network. In step 545, a determination is made as to whether the modified resources/QoS are acceptable to the S.MP. If the determination in step 545 is positive, the process 500 then returns to step 510, where the S.MP can again send an ADDTS Req message with a modified resources/QoS requirement based on the ADDTS Mod message. If the determination in step 545 is negative, the process 500 ends.

If it is determined in step 530 that the selected route does meet the S.MP's resources/QoS requirements, the central controller transmits an add TS commit ((ADDTS commit) message to the S.MP and all intermediate MPs comprising the selected path (step 550). Each MP receiving the ADDTS Commit message determines whether it can satisfy the requested resources/QoS (step 560). If any of the intermediate MPs are unable to support the requested resources/QoS, the MPs unable to satisfy the requested resources/QoS transmit an add TS Reject (ADDTS Rej) message, to the central controller, indicating the MP's inability to meet the requested resources/QoS (step 570). The process 500 central controller then proceeds with steps 540 and 545 as described above. If all intermediate nodes determine they can satisfy the requested resources/QoS in step 560, a session may now begin for a TS from the S.MP to the D.MP along the selected path (step 580).

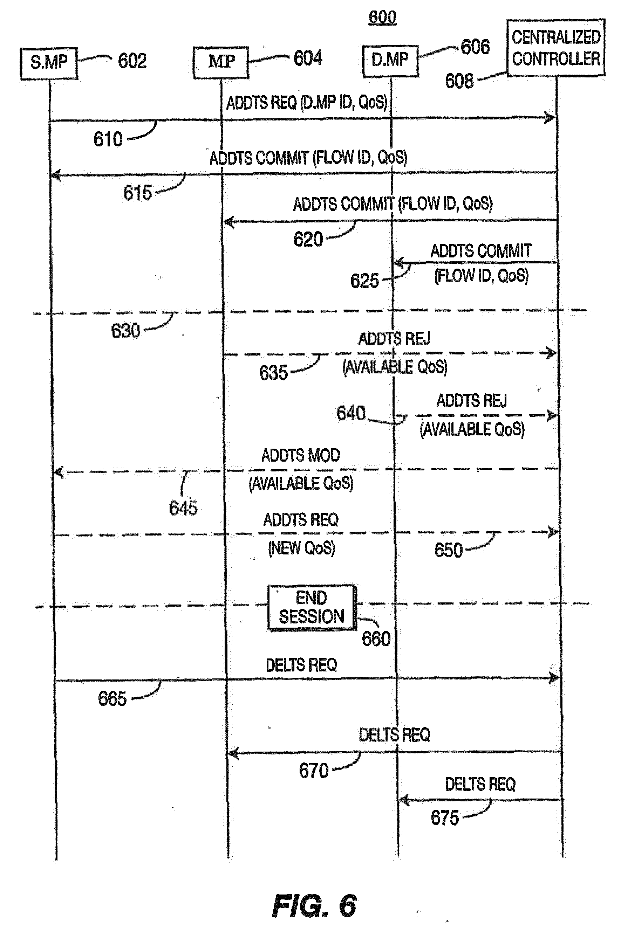

Figure 6 is a signal flow diagram of path-based TS admission control in a WLAN mesh network 600 having centralized admission control architecture in accordance with the process 500 of Figure 5. The mesh network 600 includes an S.MP 602, an intermediate MP 604, a D.MP 606 and a centralized controller 608. The S.MP 602 transmits an ADDTS Req message to the centralized controller 608 requesting a TS with the D.MP 606 (step 610). The centralized controller 608 checks an internal database of available resources and determines load on various routes between the S.MP 602 and the D.MP 606. The centralized controller 608 selects the route with the best resources/QoS metric, and updates its resource database. The centralized controller 608 transmits an ADDTS Commit message containing a TS ID, and a resources/QoS requirement to the S.MP 602 (step 615), an ADDTS Commit message to the intermediate MP 604 (step 620), and an ADDTS Commit message to the D.MP 606 (step 625). Upon receiving the ADDTS Commit from the centralized controller 608, the MP 604 and the D.MP 606 verify available resources. In the present case, the MP 604 and the D.MP 606 are capable of satisfying the resources/QoS requirement, and a session may now begin between the S.MP 602 and the D.MP 606 via intermediate mesh point MP 604 (step 630).

However, if one or both of the MP 604 and the D.MP 606 is unable to satisfy the requested resources/QoS of the ADDTS Commit messages, the MP 604 and the D.MP 606 transmit ADDTS Rej messages to the centralized controller 608 (step 635, 640). The MP 604 transmits an ADDTS Rej message to the centralized controller 608 containing resources/QoS that the MP 604 can currently satisfy (step 635). Similarly, the D.MP 606 transmits an ADDTS Rej message to the centralized controller 608 containing resources/QoS that the D.MP 606 can currently satisfy (step 640). The centralized controller 608 updates its resource database, and transmits an ADDTS Mod message to the S.MP 602 containing the best available resources/QoS for a TS to the D.MP 606 (step 645). The S.MP 602 may then transmit an ADDTS Req message containing new resources/QoS requirements (step 650). The process then repeats itself, until resources/QoS that can be satisfied is achieved and a session begins.

Optionally, in order to release resources back to the mesh network 600, when a session is terminated (step 660), the S.MP 602 transmits a delete TS request (DELTS Req) message to the centralized controller 608 (step 665). The centralized controller 608 updates its resource database accordingly, and transmits a DELTS Req message to the MP 604 instructing the MP 604 to terminate the TS (step 670). Similarly, the centralized controller 608 transmits a DELTS Req message to the D.MP 606 instructing the D.MP 606 to terminate the session (step 675). Alternatively, a TS timeout mechanism may be employed for releasing resources back to the mesh network 600. For example, when an in-session TS is idle for longer than a predetermined period of time, the session is terminated and the resources are released to the mesh network 600.

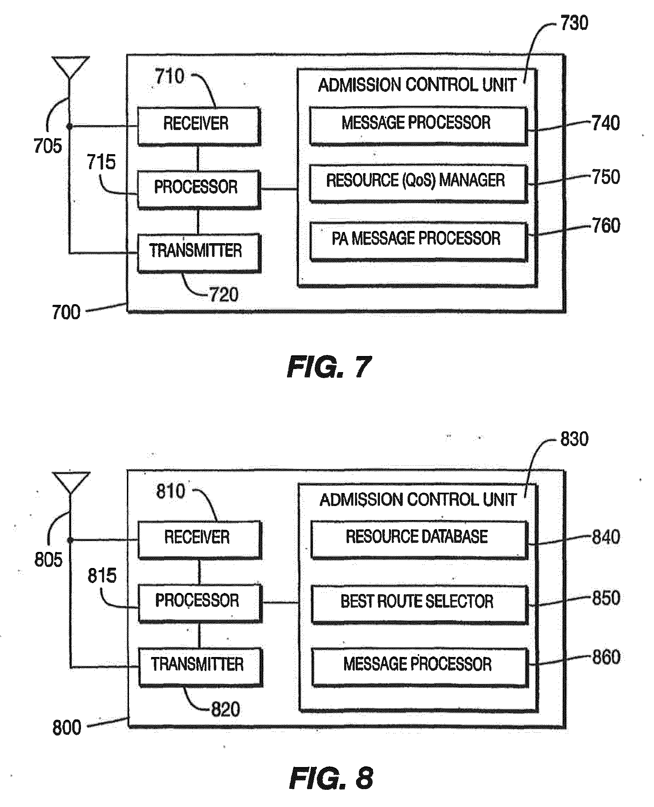

Figure 7 is an exemplary block diagram of an MP 700 configured to perform admission control in both a distributed admission controlled wireless mesh network and/or a centralized admission controlled wireless mesh network in accordance with the present invention. The MP 700 includes an antenna 705, a receiver 710, a processor 715, a transmitter 720 and an admission control unit 730. The processor 715 controls the functioning of the receiver 710 and the transmitter 720, and interfaces with the admission control unit 730. The admission control unit 730 includes a message processor 740, a resource (QoS) manager 750 and a PA message processor 760.

In a distributed admission control wireless mesh network, the message processor 740 generates ADDTS Req messages when the MP 700 is an S.MP or an intermediate MP. The message processor 740 generates optional ADDTS Resp messages when the MP 700 is acting as an intermediate MP. When a rejection or modified resources/QoS is offered, the message processor 740 informs the resource (QoS) manager 750 of the offered resources/QoS.

In a wireless mesh network utilizing a centralized admission controller, the message processor 740 generates ADDTS Req messages and ADDTS Rej messages for transmission to the centralized controller. The message processor 740 further processes received ADDTS Commit and ADDTS Modify messages from the centralized controller, and informs the resource (QoS) manger 750 of the required or offered resources.

The resource (QoS) manager 750 determines available resources of the MP 700, such as CO, buffer occupancy, or the like. The resource (QoS) manager 750 determines whether resources/QoS requirements of an ADDTS Req message is capable of being satisfied by the MP 700. When TS specific CO is used to determine whether to admit a TS, the resource (QoS) manger 750 determines CO for each TS, as described above. The resource (QoS) manager 750 further determines the requested resources/QoS for ADDTS Req messages when the MP 700 is the S.MP of a TS. Information provided from the message processor 740 is used to manage resources of the MP 700 and make appropriate resource requests to other MPs in the wireless mesh network.

In a wireless mesh network utilizing a centralized admission controller, a PA message processor 760 generates DELTS Req messages for transmission to the centralized controller when the MP 700 is the S.MP of a TS to be terminated. The PA message processor 760 processes received DELTS Req messages from the centralized controller when the MP 700 is an intermediate MP. The PA message processor 760 informs the resource (QoS) manager 750 of released resources.

In a wireless mesh network utilizing distributed admission control architecture, the PA message processor 760 generates PA Resp messages when the MP 700 is the D.MP. The PA message processor 760 also implements any timeout mechanism for receiving a PA Resp message containing the admitted path, such as the one described above, when the MP 700 is the S.MP. When the MP 700 is the S.MP, upon receiving the PA Resp message, the PA message processor 760 informs the resource (QoS) manager 750 of the allocated resources in the admitted path for commencement of the session.

Figure 8 is an exemplary block diagram of a central controller for performing path-based TS admission control in a WLAN mesh network having a centralized admission control architecture in accordance with the present invention. The centralized controller 800 is a logical entity which may be implemented in any MP or as a separate entity. The centralized controller 800 includes an antenna 805, a receiver 810, a processor 815, a transmitter 820 and an admission control unit 830. The processor 815 controls the functioning of the receiver 810 and the transmitter 820, and interfaces with the admission control unit 830. The admission control unit 830 includes a resource database 840, a best route selector 850 and a message processor 860.

The resource database 840 stores resource information of all of the MPs in the mesh network and maintains current resources/QoS capabilities of all of the MPs. The resource database 840 may acquire resource information from, for example, queries, synchronization signaling, response to beacons, and by received ADDTS Req messages, ADDTS Commit messages, and ADDTS Rej messages processed by the ADDTS message processor 860.

The best route selector 850 calculates traffic loads on the various routes between the S.MP and the D.MP. Based on calculated traffic loads, system operator preferences, and resources/QoS requirements of the TS, the best route selector 850 selects the best route and informs the resource database 840 accordingly.

The message processor 860 generates ADDTS Commit messages and ADDTS Modify messages in response to ADDTS Req messages and ADDTS Rej messages, respectively. The message processor 860 informs and updates the resource database 840 as available resources are reported in the mesh network. The message processor 860 also generates DELTS Req messages for transmission to intermediate MPs in response to DELTS Req messages received from the S.MP. The message processor 860 informs the resource database 840 of released resources.

The functionality of the admission control units 730 and 830 described above may be incorporated into an integrated circuit (IC) or be configured in a circuit comprising a multitude of interconnecting components.

In another embodiment of the present invention, an admission control mandatory (ACM) field per access category (AC) is included in an ADDTS Req message transmitted by a S.MP. The ACM field indicates to intermediate MPs whether admission control is required for the AC of the TS. If admission control is not required, the TS can be sent directly with no need for resources/QoS guarantees or negotiations. This is particularly useful for low priority data that does not require minimal latency in transmission such as, for example, large file transfers.

Embodiments

1. In a wireless mesh network including a plurality of mesh points (MPs), a method of adding a traffic stream (TS), the method comprising:

(a) a first one of the MPs originating a TS with an initial resources/quality of service (QoS) requirement destined to a destination MP;
(b) the first MP transmitting a first add TS (ADDTS) request message to another one of the MPs;
(c) the other MP determining whether to admit or reject the TS;
(d) if the other MP determines to admit the TS, the other MP determining whether the initial resources/QoS requirement needs to be modified;
(e) if the other MP admits the TS with the initial resources/QoS requirement and the other MP is not the destination MP, the other MP transmitting another ADDTS request message to another one of the MPs;
(f) repeating steps (c)-(e) until the destination MP is reached;
(g) the destination MP transmitting a path admission (PA) response message to the first MP; and
(h) the first MP beginning a session with the destination MP.

2. The method of embodiment 1 further comprising:

(i) if a particular MP rejects the TS, the particular MP transmitting an ADDTS response message to the first MP indicating a reason why the TS was rejected.

3. The method of embodiment 1 further comprising:

(i) if a particular MP determines to modify the resources/QoS, the particular MP transmitting an ADDTS response message to the first MP indicating a modified resources/QoS offer.

4. The method of embodiment 1 further comprising:

(i) the other MP transmitting an ADDTS response message to the first MP indicating success when the TS is admitted.

5. The method of embodiment 1 wherein the determination of whether to admit the TS is based on channel occupancy (CO) of the other MP.
6. The method of embodiment 1 wherein the determination of whether to admit the TS is based on buffer occupancy of the other MP.
7. The method of embodiment 1 wherein the determination of whether to admit the TS is based on link conditions associated with the other MP.
8. A wireless mesh network comprising:

(a) a destination mesh point (MP);
(b) at least one intermediate MP; and
(c) a source MP, wherein the source MP is configured to originate a traffic stream (TS) with an initial resources/quality of service (QoS) requirement destined to the destination MP, the source MP includes a first transmitter which transmits a first add TS (ADDTS) request message to the intermediate MP, the intermediate MP includes an admission control unit which determines whether to admit or reject the TS, a second transmitter of the intermediate MP transmits a second ADDTS request message to the destination MP if the intermediate MP admits the TS with the initial resources/QoS requirement, and a third transmitter of the destination MP transmits a path admission (PA) response message to the source MP indicating that the source MP can begin a session with the destination MP.

9. The wireless mesh network of embodiment 8 wherein if the intermediate MP rejects the TS, the second transmitter of the intermediate MP transmits an ADDTS response message to the source MP indicating a reason why the TS was rejected.

10. The wireless mesh network of embodiment 8 wherein if the intermediate MP determines to modify the resources/QoS, the second transmitter of the intermediate MP transmits an ADDTS response message to the source MP indicating a modified resources/QoS offer.

11. The wireless mesh network of embodiment 8 wherein the second transmitter of the intermediate MP transmits an ADDTS response message to the first MP indicating success when the TS is admitted.

12. The wireless mesh network of embodiment 8 wherein the admission control unit determines whether to admit the TS based on channel occupancy (CO) of the other MP.

13. The wireless mesh network of embodiment 8 wherein the admission control unit determines whether to admit the TS based on based on buffer occupancy of the intermediate MP.

14. The wireless mesh network of embodiment 8 wherein the admission control unit determines whether to admit the TS based on based on link conditions associated with the other MP.

15. In a wireless mesh network including a plurality of mesh points (MPs) and a centralized controller, a method of adding a traffic stream (TS), the method comprising:

    (a) a first one of the MPs transmitting an add TS (ADDTS) request message to the centralized controller;
    (b) the centralized controller selecting a route including the first MP;
    (c) the centralized controller transmitting an ADDTS commit message to the first MP, the ADDTS commit message identifying a TS and a resources/quality of service (QoS) requirement;
    (d) the centralized controller transmitting ADDTS commit messages identifying the TS and the resources/QoS requirement to other MPs included in the selected route, the other MPs including a destination MP; and
    (e) if the other MPs satisfy the resources/QoS requirement, establishing a session between the first MP and the destination MP via the selected route.

16. The method of embodiment 15 further comprising:

    (f) if at least one of the other MPs is unable to satisfy the resources/QoS requirement, the at least one other MP transmitting an ADDT reject message to the centralized controller indicating the resources/QoS that the at least one other MP can satisfy.

17. The method of embodiment 16 further comprising:

    (g) the centralized controller transmitting an ADDTS modify message including a new resources/QoS requirement to the first MP; and
    (h) the first MP transmitting an ADDTS request message indicating the new resources/QoS requirements.

18. A mesh point (MP) configured to operate in a wireless mesh network, the MP comprising:

    an antenna;
    a transmitter coupled to the antenna for transmitting admission control messages;
    a receiver coupled to the antenna for receiving admission control messages;
    a processor for controlling the receiver and the transmitter; and
    an admission control unit coupled to the processor, the admission control unit comprising:
    a first message processor configured to generate add traffic stream (ADDTS) request messages, ADDTS reject messages and ADDTS response messages;
    a resource manager configured to determine whether or not a requested resources/quality of service (QoS) requirement of a traffic stream can be satisfied; and
    a second message processor configured to transmit and receive path admission (PA) response messages.

19. The MP of embodiment 18 wherein the first message processor is further configured to receive ADDTS commit messages and ADDTS modify messages from a centralized admission controller.

20. The MP of embodiment 18 wherein the second message processor is further configured to transmit and receive delete TS (DELTS) request messages from/to a centralized admission controller.

21. A central controller configured to operate in a wireless mesh network having centralized traffic stream admission control architecture, the central controller comprising:

    an antenna;
    a transmitter coupled to the antenna for transmitting admission control messages;
    a receiver coupled to the antenna for receiving admission control messages;

a processor for controlling the receiver and the transmitter; and
an admission control unit coupled to the processor, the admission control unit comprising:
a resource database configured to store resource information associated with a plurality of MPs in the wireless mesh network;
a best route selector for selecting a best route and informing the resource database accordingly; and
a message processor configured to generate add traffic stream (ADDTS) commit messages and ADDTS modify messages in response to ADDTS request messages and ADDTS reject messages, respectively.

Although the features and elements of the present invention are described in the preferred embodiments in particular combinations, each feature or element can be used alone without the other features and elements of the preferred embodiments or in various combinations with or without other features and elements of the present invention. Other variations which are within the scope of the invention as outlined in the claims below will be apparent to those skilled in the art.

A1. In a wireless mesh network including a plurality of mesh points (MPs), a method of adding a traffic stream (TS), the method comprising:

(a) a first one of the MPs originating a TS with an initial resources/quality of service (QoS) requirement destined to a destination MP;
(b) the first MP transmitting a first add TS (ADDTS) request message to another one of the MPs;
(c) the other MP determining whether to admit or reject the TS;
(d) if the other MP determines to admit the TS, the other MP determining whether the initial resources/QoS requirement needs to be modified;
(e) if the other MP admits the TS with the initial resources/QoS requirement and the other MP is not the destination MP, the other MP transmitting another ADDTS request message to another one of the MPs;
(f) repeating steps (c)-(e) until the destination MP is reached;
(g) the destination MP transmitting a path admission (PA) response message to the first MP; and
(h) the first MP beginning a session with the destination MP.

A2. The method of embodiment A1 further comprising:

(i) if a particular MP rejects the TS, the particular MP transmitting an ADDTS response message to the first MP indicating a reason why the TS was rejected.

A3. The method of embodiment A1 further comprising:

(i) if a particular MP determines to modify the resources/QoS, the particular MP transmitting an ADDTS response message to the first MP indicating a modified resources/QoS offer.

A4. The method of embodiment A1 further comprising:

(i) the other MP transmitting an ADDTS response message to the first MP indicating success when the TS is admitted.

A5. The method of embodiment A1 wherein the determination of whether to admit the TS is based on channel occupancy (CO) of the other MP.
A6. The method of embodiment A1 wherein the determination of whether to admit the TS is based on buffer occupancy of the other MP.
A7. The method of embodiment A1 wherein the determination of whether to admit the TS is based on link conditions associated with the other MP.
A8. A wireless mesh network comprising:

(a) a destination mesh point (MP);
(b) at least one intermediate MP; and
(c) a source MP, wherein the source MP is configured to originate a traffic stream (TS) with an initial resources/quality of service (QoS) requirement destined to the destination MP, the source MP includes a first transmitter which transmits a first add TS (ADDTS) request message to the intermediate MP, the intermediate MP includes an admission control unit which determines whether to admit or reject the TS, a second transmitter of the intermediate MP transmits a second ADDTS request message to the destination MP if the intermediate MP admits the TS with the initial resources/QoS requirement, and a third transmitter of the destination MP transmits a path admission (PA) response message to the source MPindicating that the source MP can begin a session with the destination MP.

A9. The wireless mesh network of embodiment A8 wherein if the intermediateMP rejects the TS, the second transmitter of the intermediate MP transmits an ADDTS response message to the source MP indicating a reason why the TS was rejected.

A10. The wireless mesh network of embodiment A8 wherein if the intermediate MP determines to modify the resources/QoS, the second transmitter of the intermediate MP transmits an ADDTS response message to the source MP indicating a modified resources/QoS offer.

A11. The wireless mesh network of embodiment A8 wherein the second transmitter of the intermediate MP transmits an ADDTS response message to the first MP indicating success when the TS is admitted.

A12. The wireless mesh network of embodiment A8 wherein the admission control unit determines whether to admit the TS based on channel occupancy (CO) of the otherMP.

A13. The wireless mesh network of embodiment A8 wherein the admission control unit determines whether to admit the TS based on based on buffer occupancy of the intermediate MP.

A14. The wireless mesh network of embodiment A8 wherein the admission control unit determines whether to admit the TS based on based on link conditions associated with the other MP.

A15. In a wireless mesh network including a plurality of mesh points (MPs) and a centralized controller, a method of adding a traffic stream (TS), the method comprising:

(a) a first one of the MPs transmitting an add TS (ADDTS) request message to the centralized controller;
(b) the centralized controller selecting a route including the first MP;
(c) the centralized controller transmitting an ADDTS commit message to the first MP, the ADDTS commit message identifying a TS and a resources/quality of service (QoS) requirement;
(d) the centralized controller transmitting ADDTS commit messages identifying the TS and the resources/QoS requirement to other MPs included in the selected route, the other MPs including a destination MP; and
(e) if the other MPs satisfy the resources/QoS requirement, establishing a session between the first MP and the destination MP via the selected route.

A16. The method of embodiment A15 further comprising:

(f) if at least one of the other MPs is unable to satisfy the resources/QoS requirement, the at least one otherMP transmitting anADDT reject message to the centralized controller indicating the resources/QoS that the at least one other MP can satisfy.

A17. The method of embodiment A16 further comprising:

(g) the centralized controller transmitting an ADDTS modify message including a new resources/QoS requirement to the first MP; and
(h) the first MP transmitting an ADDTS request message indicating the new resources/QoS requirements.

A18. A mesh point (MP) configured to operate in a wireless mesh network, the MP comprising:

an antenna;
a transmitter coupled to the antenna for transmitting admission control messages;
a receiver coupled to the antenna for receiving admission control messages;
a processor for controlling the receiver and the transmitter; and
an admission control unit coupled to the processor, the admission control unit comprising:
a first message processor configured to generate add traffic stream (ADDTS) request messages, ADDTS reject messages and ADDTS response messages;
a resource manager configured to determine whether or not a requested resources/quality of service (QoS) requirement of a traffic stream can be satisfied; and
a second message processor configured to transmit and receive path admission (PA) response messages.

A19. The MP of embodiment A18 wherein the first message processor is further configured to receive ADDTS commit messages and ADDTS modify messages from a centralized admission controller.

A20. The MP of embodiment A18 wherein the second message processor is further configured to transmit and receive delete TS (DELTS) request messages from/to a centralized admission controller.

A21. A central controller configured to operate in a wireless mesh network having centralized traffic stream admission control architecture, the central controller comprising:

an antenna;
a transmitter coupled to the antenna for transmitting admission control messages;
a receiver coupled to the antenna for receiving admission control messages;
a processor for controlling the receiver and the transmitter; and
an admission control unit coupled to the processor, the admission control unit comprising:
a resource database configured to store resource information associated with a plurality of MPs in the wireless mesh network;
a best route selector for selecting a best route and informing the resource database accordingly; and
a message processor configured to generate add traffic stream (ADDTS) commit messages and ADDTS modify messages in response to ADDTS request messages and ADDTS reject messages, respectively.

## Claims

1. A method of wireless communication, comprising:

   receiving, by a first wireless transmit/receive unit (WTRU) via a second WTRU a request;
   determining, by the first WTRU, whether accepting the request would cause an operational parameter to exceed a threshold;
   on condition that the first WTRU determines to reject the request, transmitting, by the first WTRU to the second WTRU, a response indicating that the request is rejected and a reason for rejection, the response including an offer that is acceptable to the first WTRU to at least modify resources associated with the request; and
   on condition that the first WTRU determines that accepting the request would not cause the operational parameter to exceed the threshold, transmitting by the first WTRU to the second WTRU a response indicating that the request is accepted.

2. A wireless transmit/receive unit (WTRU), comprising:

   a receiving unit configured to receive a request;
   a processing unit configured to determine whether accepting the request would cause an operational parameter to exceed a threshold; and
   a transmitting unit configured to:

   respond to the request by indicating that the request is accepted, on condition that accepting the request would not cause the operational parameter to exceed the threshold; and
   respond to the request by indicating that the request is rejected and a reason for rejection, and including an offer that is acceptable to the WTRU to at least modify resources associated with the request.

3. The method of claim 1, wherein the reason for rejection indicated is one of a plurality of reasons, each of the reasons being based on resources associated with the request or the operational parameter.

4. The method of claim 1, wherein the threshold limits a channel usage between the first WTRU and the second WTRU.

5. The method of claim 1, wherein the operational parameter is one of: resources or quality of service (QoS) associated with the second WTRU.

6. The method of claim 1, wherein the determining of whether accepting the request would cause the operational parameter to exceed the threshold includes determining whether a channel occupancy associated with the second WTRU would remain below a threshold channel occupancy, if the first WTRU admits a traffic stream at a QoS specified by the second WTRU in the request or using resources specified by the second WTRU in the request.

7. A method of wireless communication comprising:

receiving, by a wireless transmit/receive unit (WTRU) a request;

determining, by the WTRU, whether accepting the request would cause an operational parameter to exceed a threshold;

selecting, based on the determination, among responding to the request by:

(1) indicating that the request is accepted, on condition that accepting the request would not cause the operational parameter to exceed the threshold;

(2) indicating that the request is rejected, and providing a reason for rejection; and

(3) indicating that the request is rejected, and providing an offer that would to be accepted by the WTRU to modify resources associated with the request.

8. The WTRU of claim 2, wherein the reason for the rejection indicated is one of a plurality of reasons, each of the reasons being based on resources associated with the request or the operational parameter.

9. The WTRU of claim 2, wherein the threshold limits a channel usage between the WTRU and a second WTRU.

10. The WTRU of claim 2, wherein the operational parameter is one of: resources or quality of service (QoS) associated with a second WTRU.

11. The WTRU of claim 2, wherein the processing unit is configured to determine whether a channel occupancy associated with a second WTRU would remain below a threshold channel occupancy, if the WTRU admits a traffic stream at a QoS specified by the second WTRU in the request or using resources specified by the second WTRU in the request.

12. A wireless transmit/receive unit comprising:

a receiving unit configured to receive a request;

a processing unit configured to:

determine whether accepting the request would cause an operational parameter to exceed a threshold, and select, based on the determination, from among responding to the request by:

(1) indicating that the request is accepted, on condition that accepting the request would not cause the operational parameter to exceed the threshold;

(2) indicating that the request is rejected, and providing a reason for rejection; and

(3) indicating that the request is rejected, and providing an offer that would to be accepted by the WTRU to modify resources associated with the request.

*100*

○ MESH POINT (MP)

△ GATEWAY

**FIG. 1 PRIOR ART**

*300*

**FIG. 3**

_200_

```
                    ┌─────────┐
                    │  START  │
                    └────┬────┘
                         │
         ┌───────────────▼──────────────────────┐
210 ─────│ S.MP TRANSMITS ADDTS REQ MESSAGE TO A │◄──────────┐
         │RECEIVING MP IN A PREFERRED PATH TO THE D.MP.│      │
         └───────────────┬──────────────────────┘            │
                         │                                    │
                         │                         ┌──────────┴──────┐
220                      ▼          NO             │  RECEIVING MP   │
              ◇CAN RECEIVING◇──────────────────►   │  TRANSMITS TO   │
         ┌────◇ MP ADMIT TRAFFIC◇                   │  THE S.MP ADDTS │
         │    ◇   STREAM?   ◇                       │  RESP INDICATING│
         │         ◇                        240 ───│   REJECTION.    │
         │         │ YES                            └─────────────────┘
         │         │
 ┌───────▼──┐      │                    250           ┌──────────────┐
 │ TRANSMIT │  230 ▼                                  │ MP TRANSMITS │
 │ADDTS REQ TO│    ◇  WITH  ◇          NO             │  ADDTS RESP  │
 │ NEXT MP IN │◄──◇REQUESTED RESOURCES/◇─────────────►│  INDICATING  │
 │   PATH.  │    ◇   QOS?   ◇                         │   MODIFIED   │
 └───▲──────┘         ◇                               │RESOURCES/QoS │
     │    270         │ YES                           │    OFFER.    │
     │                │                               └──────────────┘
     │                │               260
 ┌───┴────────┐       ▼
 │(OPTIONAL)  │  NO  ◇  IS  ◇
 │CURRENT MP  │◄─────◇CURRENT MP THE◇
 │SENDS ADDTS │      ◇  D.MP?  ◇
 │RESP TO S.MP.│          ◇
 └────────────┘          │ YES
    265                   │
                          ▼
              ┌───────────────────────────┐
              │ D.MP SENDS PA RESP TO S.MP.│──── 280
              └────────────┬──────────────┘
                           │
              ┌────────────▼──────────────┐
              │    S.MP BEGINS SESSION.    │──── 290
              └────────────┬──────────────┘
                           │
                      ┌────▼────┐
                      │   END   │
                      └─────────┘
```

**FIG. 2**

FIG. 4

<u>500</u>

START

S.MP TRANSMITS ADMISSION REQUEST TO CENTRAL CONTROLLER, INCLUDING RESOURCES/QoS AND D.MP IDENTIFICATION. —510

CENTRAL CONTROLLER SELECTS BEST ROUTE(S) FOR MEETING S.MP's REQUESTED RESOURCES/QoS BASED ON CONTROL POLICY AND KNOWLEDGE OF AVAILABLE ROUTES. —520

ARE MODIFIED RESOURCES/QOS ACCEPTABLE TO S.MP ? —545

YES

NO

END

530

DOES SELECTED ROUTE MEET S.MP's REQUESTED RESOURCES/QOS ?

NO

YES

540

CENTRAL CONTROLLER TRANSMITS ADDTS MOD MESSAGE TO S.MP WITH MODIFIED RESOURCES/QoS.

550 CENTRAL CONTROLLER TRANSMITS ADDTS COMMIT MESSAGE TO S.MP AND INTERMEDIATE NODES.

560

CAN ALL INTERMEDIATE NODES SUPPORT RESOURCES/ QoS?

INTERMEDIATE NODE TRANSMITS ADDTS REJ MESSAGE TO CENTRAL CONTROLLER.

NO

570

YES

580 BEGIN SESSION.

**FIG. 5**

16

**FIG. 6**

**FIG. 7**

**FIG. 8**